# EUROPÄISCHE PATENTANMELDUNG

(11) **EP 1 459 921 A1**
(43) Veröffentlichungstag der Anmeldung: **22.09.2004**
(21) Anmeldenummer: 04005934.7
(22) Anmeldetag: 12.03.2004
(51) Int. Cl.: B60H 3/06

(54) **Filtervorrichtung für ein Kraftfahrzeug**

(30) Priorität: 21.03.2003 DE 10312598
(71) Anmelder: ADAM OPEL AG, 65423 Rüsselsheim (DE)
(72) Erfinder: Jordan, Frank, 10128 Torino (IT)

(57) **Zusammenfassung**

Eine Filtervorrichtung für ein Kraftfahrzeug umfasst eine Luftführung (10), an der unterschiedliche Luftstromwege (A, B, C) zum Zuleiten einer Luftmenge in den Fahrzeuginnenraum (20) einstellbar und in der ein Luftfilter (11) zum Abscheiden von Schmutz sowie ein elektrisch angesteuertes Gebläse (12) zum Erzeugen eines geförderten Luftstroms angeordnet sind. Eine mit dem Gebläse (12) und der Luftzuführung (10) elektrisch verbundene Messeinheit (13) berechnet und speichert in Abhängigkeit von der Gebläsespannung und des eingestellten Luftstromwegs (A, B, C) eine zeitlich integrierte, insgesamt durch den Luftfilter (11) geströmte Luftmenge, ermittelt den Verschmutzungsgrad des Luftfilters (11) in Abhängigkeit von dieser Gesamtluftmenge und visualisiert den Verschmutzungsgrad des Luftfilters (11) in einer Anzeige (14).

## Beschreibung

Die Erfindung bezieht sich auf eine Filtervorrichtung für ein Kraftfahrzeug mit einer Luftführung, an der unterschiedliche Luftstromwege zum Zuleiten einer Luftmenge in den Fahrzeuginnenraum einstellbar und in der ein Luftfilter zum Abscheiden von Schmutz sowie ein elektrisch angesteuertes Gebläse zum Erzeugen eines geförderten Luftstroms angeordnet sind.

Eine derartige Filtervorrichtung ist aus der Praxis bekannt und wird in Belüftungs-, Heizungs- und Klimaanlagen von Kraftfahrzeugen eingesetzt. Dabei verwendete Luftfilter dienen zum Abscheiden von partikel- bzw. gasförmigen Verunreinigungen aus der belasteten Luft, die anderenfalls z.B. zu allergischen Reaktionen führen können. Es wird darüber hinaus die Verschmutzung an Gebläse, Heizung, Instrumententafel und Frontscheibe verringert.

Mit zunehmender Verschmutzung lässt die Wirksamkeit eines solchen Luftfilters bis zur Unbrauchbarkeit nach, wodurch ein Wechsel unvermeidlich wird. Problematisch ist es allerdings zu erkennen, wann dieser Verschmutzungsgrad erreicht ist. Bislang wurden Wechselintervalle für den Luftfilter in km-Laufleistung des Kraftfahrzeuges angegeben. Eine Unterscheidung zwischen intensiver oder geringer Gebläsenutzung oder verschiedenen Verschmutzungsgraden der angesaugten Luft findet nicht statt.

Im Rahmen der Festlegung von Wechselintervallen wurde festgestellt, dass für einige Kraftfahrzeuge die generelle Intervallzeit für den Filterwechsel zu lang (50000 km), für andere wiederum zu kurz ist (20000 km). Um sinnvolle Intervalle anzugeben, ist deshalb die Kenntnis des tatsächlichen Verschmutzungsgrades des Luftfilters notwendig. Auf Grund der schlecht zugänglichen Einbauposition des Luftfilters ist dies - anders als z.B. bei einem Benzinfilter im Klarsichtgehäuse - zumindest auf Sicht schwer festzustellen.

Die DE 40 14 442 A1 beschreibt eine Vorrichtung zur Anzeige des Verschmutzungsgrads von Luftfiltern in Saugreinigungsgeräten, Raumfiltern oder dergleichen. Bei dieser Vorrichtung wird der Verschmutzungsgrad mit einer optischen Messanordnung am Luftfilter festgestellt. Dazu ist eine Lichtschranke vorgesehen, die wiederum mit einer Anzeige verbunden ist. Eine solche Messanordnung ist aber unter den Betriebsbedingungen eines Kraftfahrzeuges ausfallkritisch, da die Optik selbst verschmutzt und Falschanzeigen liefert. Darüber hinaus sind die zusätzlich anzubringenden Sensoren relativ teuer.

Die DE 36 31 258 C2 offenbart eine Filtervorrichtung für die Frischluftzufuhr zum Fahrgastraum eines Kraftfahrzeuges, bei der eine Filtereinheit mit einer fotoelektrischen Überwachungseinrichtung zum Feststellen des Verschmutzungsgrades der Luft versehen ist. Dabei ist ein Lichtstrahlensender einem lichtempfindlichem Empfänger an einer luftdurchströmten Filterhülse zugeordnet. Aus den vorstehend genannten Gründen ist auch diese Überwachungseinrichtung unter den Betriebsbedingungen eines Kraftfahrzeugs nicht praktikabel.

Aus der US 4 467 706 ist ein Regelsystem zur Frischluftversorgung einer Traktorenkabine bekannt, bei dem durch Frischluftzufuhr in die Kabine ein Überdruck erzeugt wird, durch den verbrauchte Luft in die Umgebung abgeführt wird. Die Frischluft durchströmt dabei vor ihrem Eintritt in die Kabine einen Frischluftfilter. Aus dieser Druckschrift sind allerdings keine Mittel ersichtlich, wie die funktionsgemäße Wirkung des Filters bei Verschmutzung sichergestellt wird.

Des Weiteren zeigt die DE 35 45 866 A1 ein Luftbehandlungsgerät zur Klimatisierung von Kraftfahrzeugen, mit einem Luftfilter und einem Wärmetauscher, bei dem steuerbare Gebläse über eine Regelanordnung zur Einstellung eines konstanten Volumenstroms gekoppelt sind. Über eine Sicherstellung der funktionsgemäßen Wirkung des Luftfilters mit zunehmender Verschmutzung ist dieser Druckschrift allerdings nichts zu entnehmen.

Darüber hinaus offenbart die DE 41 00 817 A1 eine Anordnung zum Regeln der dem Innenraum eines Kraftfahrzeuges zugeführten Luftmenge, bei der Störeinflüsse, wie Fahrgeschwindigkeit, Fenster- und Schiebedachbetätigungen und dergleichen, in Abhängigkeit eines vorgegebenen Sollwerts angepasst werden, wozu eine entsprechende Mess- und Regelvorrichtung vorgesehen ist. Auch dieser Druckschrift ist nicht zu entnehmen, wie einer Verschmutzung eingesetzter Luftfilter begegnet werden kann.

Es ist Aufgabe der Erfindung, eine Filtervorrichtung der eingangs genannten Art zu schaffen, bei der die stets funktionsgemäße Wirkung des Luftfilters auf konstruktiv einfache, zuverlässige und kostengünstige Art sichergestellt werden kann.

Erfindungsgemäß wird die Aufgabe dadurch gelöst, dass eine mit dem Gebläse und der Luftzuführung elektrisch verbundene Messeinheit in Abhängigkeit von der Gebläsespannung und der eingestellten Luftstromwege eine zeitlich integrierte, insgesamt durch den Luftfilter geströmte Luftmenge berechnet sowie speichert, den Verschmutzungsgrad des Luftfilters in Abhängigkeit von dieser Gesamtluftmenge ermittelt und in einer Anzeige visualisiert.

Ein wesentlicher Grundgedanke besteht dabei in der Nutzung der Filtervorrichtungen vorhandene Komponenten, wie Gebläse und Luftführung, zum Bestimmen der Gesamtluftmenge. Dadurch wird eine aufwendige und möglicherweise anfällige Sensorik überflüssig, die zudem kostentreibend ist. Die erfindungsgemäße Lösung sieht dagegen lediglich eine Messeinheit vor, in der an sich bekannte Zusammenhänge zwischen der Gebläseaktivität und dem Luftstromweg einerseits und die daraus resultierende Filterverschmutzung andererseits hinterlegt sind. Wird ein durchschnittlicher Verschmutzungsgrad der angesaugten Luft angenommen, so kann über die berechnete Luftmenge durch den Luftfilter ein sinnvolles Kriterium zum Wechseln des Luftfilters ermittelt werden. Der Verschmutzungsgrad des Luftfilters kann somit festgestellt werden, was eine bessere Ausnutzung des Luftfilters durch einen längeren Gebrauch erlaubt.

Eine solche Messeinheit kann z.B. einen digitalen Prozessor umfassen, in dem diese Zusammenhänge in Abhängigkeit der Signale an Gebläse (V) und Luftführung (Luftstromweg) softwaretechnisch ausgewertet und in der Anzeige visualisiert werden. Denkbar ist allerdings auch ein entsprechender Integratorschaltkreis auf Basis herkömmlicher elektronischer Bauelemente, um eine zeitliche Aufsummierung der Gebläsespannung auf eine insgesamt verbrauchte Gesamtenergie (Wh) zu gewährleisten, in die ebenfalls die jeweilige Luftführung eingeht. Für die Bestimmung des Wechselzeitpunkts des Luftfilters ist aber auch der Verschmutzungsgrad der angesaugten Luft entscheidend, welcher hier z.B. als durchschnittlich (auf befestigten Straßen im Mittel 1 mg/m³) angenommen werden kann.

In Ausgestaltung der Erfindung ist in der Messeinheit wenigstens eine Kennlinie gespeichert, die den Verschmutzungsgrad des Luftfilters in Abhängigkeit von der Gesamtluftmenge angibt, und die zum Ermitteln des Verschmutzungsgrads des Luftfilters aus der festgestellten Gesamtluftmenge ausgewertet wird. Jedes Klimasystem weist Luftdurchsatzmengen (1/sec) auf, welche von der Gebläsespannung und der gewählten Luftführung abhängig sind. Zumindest bei elektronischen Ansteuerungen sind diese bekannt und können als Kennlinien implementiert werden. Eine Integration dieser Werte stellt deshalb kein Problem dar.

Vorzugsweise ist in der Messeinheit ein zu erwartender, durchschnittlicher Verschmutzungsgrad angesaugter Luft und/oder ein Filtertyp einstellbar, der in die Ermittlung des Verschmutzungsgrads des Luftfilters eingeht. Der typischerweise zu erwartende Verschmutzungsgrad angesaugter Luft (schwach / mittel / stark) kann z.B. im Werk, beim Händler oder zu Serviceterminen einprogrammiert werden oder auch durch den Nutzer einstellbar sein. Da ferner je nach Anforderung entweder Partikel- oder Kombifilter mit unterschiedlichem Druckverlust eingesetzt werden, trägt auch diese Angabe zur genaueren Ermittlung des Verschmutzungsgrads des Luftfilters bei.

Bevorzugt geben in der Messeinheit gespeicherte Kennlinien den Einfluss verschiedener Verschmutzungsgrade angesaugter Luft und/oder Filtertypen wieder und, abhängig von der Einstellung, wird wenigstens eine davon zum Ermitteln des Verschmutzungsgrads des Luftfilters ausgewertet. Damit werden zum Ermitteln der Filterverschmutzung Kennlinien verwertet, die üblicherweise als Charakteristiken einer Lüftungs-, Heizungs- oder Klimaanlage bekannt sind. Diese können insbesondere softwaretechnisch leicht ausgewertet werden und erhöhen die Genauigkeit beim Ermitteln des Verschmutzungsgrads des Luftfilters.

Nach einer weiteren vorteilhaften Ausgestaltung der Erfindung ist an oder im Bereich der Luftführung ein mit der Messeinheit elektrisch verbundener Temperaturfühler vorgesehen, dessen jeweils erfasste Temperatur in die Berechnung der Gesamtluftmenge eingeht, die durch den Luftfilter geströmt ist. Damit werden Temperatureinflüsse ausgeschlossen, nach denen bei hohen Temperaturen der Luftdurchsatz am Gebläse sinkt, anderenfalls steigt. Ein Temperaturfühler muss dabei nicht notwendigerweise nachgerüstet werden, es kann z.B. auf einen schon vorhandenen Fühler zum Erfassen der Außentemperatur zurückgegriffen werden, der oftmals schon am Kraftfahrzeug vorgesehen ist. Auch dadurch wird die Genauigkeit bei der Ermittlung des Verschmutzungsgrads des Luftfilters verbessert.

Zweckmäßigerweise ist die Messeinheit mit einem Geschwindigkeitsmesser des Kraftfahrzeuges elektrisch verbunden, dessen jeweils erfasste Geschwindigkeit in die Berechnung der Gesamtluftmenge eingeht, die durch den Luftfilter geströmt ist. Bei hohen Geschwindigkeiten nimmt der Staudruck an der Fahrzeugvorderseite zu, wodurch zumindest im Fall der Frischluftzufuhr eine erhebliche Varianz bei der in den Fahrzeuginnenraum geführten Luftmenge entsteht. Bei einer hohen Geschwindigkeit des Kraftfahrzeuges wird demnach der Luftfilter stärker verschmutzen als bei einer geringen Geschwindigkeit, wobei hinzutritt, dass hohe Geschwindigkeiten üblicherweise auf Straßen gefahren werden, auf denen durch weitere sich entsprechend schnell bewegende Kraftfahrzeuge eine stärkere Staubbildung vorliegt. Die Berücksichtigung der Fahrzeuggeschwindigkeit verbessert damit die Genauigkeit bei der Ermittlung des Verschmutzungsgrads des Luftfilters.

Bevorzugt umfassen die an der Luftführung einstellbaren Luftstromwege eine Umluft- und eine Frischluftzufuhr zum Fahrzeuginnenraum. Damit werden von der erfindungsgemäßen Ermittlung der Filterverschmutzung alle Belüftungsmöglichkeiten umfasst, wodurch auch im Fahrzeuginnenraum entstehende Luftverschmutzungen berücksichtigt sind.

Zweckmäßigerweise wird der aktuelle Verschmutzungsgrad fortlaufend oder in zeitlichen Abständen in der Anzeige visualisiert. Die Spannung am Gebläse kann dabei z.B. alle 4 oder 10 Sekunden gemessen und die Anzeige entsprechend aktualisiert werden. Der Nutzer wird damit über den Filterzustand stets ausreichend informiert.

Vorteilhafterweise wird der aktuelle Verschmutzungsgrad bei Erreichen vorbestimmter Verschmutzungsstufen in der Anzeige visualisiert. Eine Aktualisierung der Anzeige erfolgt danach erst, wenn eine wesentliche Veränderung des Verschmutzungsgrads des Filters ermittelt wurde. Der Nutzer wird damit nur über wesentliche Veränderungen des Filterzustands in Kenntnis gesetzt.

Nach einer Weiterbildung des Erfindungsgedankens wird bei Erreichen eines vorbestimmten Verschmutzungsgrenzwertes eine Aufforderung zum Filterwechsel in der Anzeige visualisiert. Damit wird dem Nutzer des Kraftfahrzeuges lediglich die Information bereitgestellt, welche zur Wahrung von Serviceterminen wichtig ist. Eine Visualisierung kann dabei auch schon kurz vor dem Erreichen des Verschmutzungsgrenzwerts vorgenommen werden, um dem Nutzer einen rechtzeitigen Wechsel zu ermöglichen.

Bevorzugt ist die Anzeige als Diodenanzeige oder als ein Display ausgeführt. Verschiedene Verschmutzungsstufen des Filters können z.B. durch verschiedene Farben (grün / orange / rot) angezeigt werden, dies auch in Verbindung mit einem z.B. transparent durchscheinenden Schriftzug "Filter wechseln" bei Erreichen des Verschmutzungsgrenzwerts. Ein Display könnte dagegen mit üblichen Stilelementen zum Visualisieren des Verschmutzungsgrads arbeiten, z.B. mit zunehmenden Betragsbalken oder Betragsangaben ("10%") und Zeichenangaben ("Filter wechseln").

Vorzugsweise sind die Funktionen der Messeinheit in dem Steuergerät einer Klimaanlage ausgebildet. Damit entfällt eine zusätzlich herzustellende und zu montierende Komponente, wodurch keine weiteren Kosten entstehen. Bei Klimaanlagen mit Prozessor und Speicher (EEProm) kann aus der Gebläsespannung und der Luftführung die Gesamtluftmenge durch den Luftfilter einfach berechnet werden. Die Funktionen der Messeinheit werden insbesondere softwaretechnisch in dem Steuergerät der Klimaanlage implementiert, die bereits alle notwendigen Verbindungen zu Gebläse und Luftführung aufweist. Zur Sicherstellung der funktionsgemäßen Wirkung des Luftfilters ist somit keine weitere Hardware erforderlich, sondern lediglich die Erweiterung bzw. Anpassung der schon im Steuergerät laufenden Software.

Bevorzugt wird als Anzeige eine üblicherweise schon in dem Kraftfahrzeug vorhandene Anzeige verwendet. Im Fall einer vorhandenen Klimaanlage kann dies das Display des Bediengeräts sein. Es eignet sich aber auch ein zentrales Display an der Armaturentafel oder an einer Navigationshilfe. Es kann vorgesehen sein, dass ein Hinweis "Filter wechseln" eine andere Information am Display verdeckt, bis der Nutzer diesen Hinweis bestätigt, also zur Kenntnis genommen hat.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

Die Erfindung wird im Folgenden anhand eines Ausführungsbeispiels unter Bezugnahme auf die zugehörigen Zeichnungen näher erläutert. Gleiche oder gleichwirkende Teile sind mit gleichen Bezugsziffern versehen. Es zeigen:
- Fig. 1: eine schematische, geschnittene Seitenansicht des Konsolenbauraums eines Kraftfahrzeuges mit einer dort angeordneten Filtervorrichtung gemäß der Erfindung, und
- Fig. 2: ein Diagramm, welches die Abhängigkeit des Verschmutzungsgrads des Luftfilters von der durch ihn geströmten Gesamtluftmenge für verschiedene Verschmutzungsgrade der angesaugten Luft wiedergibt.

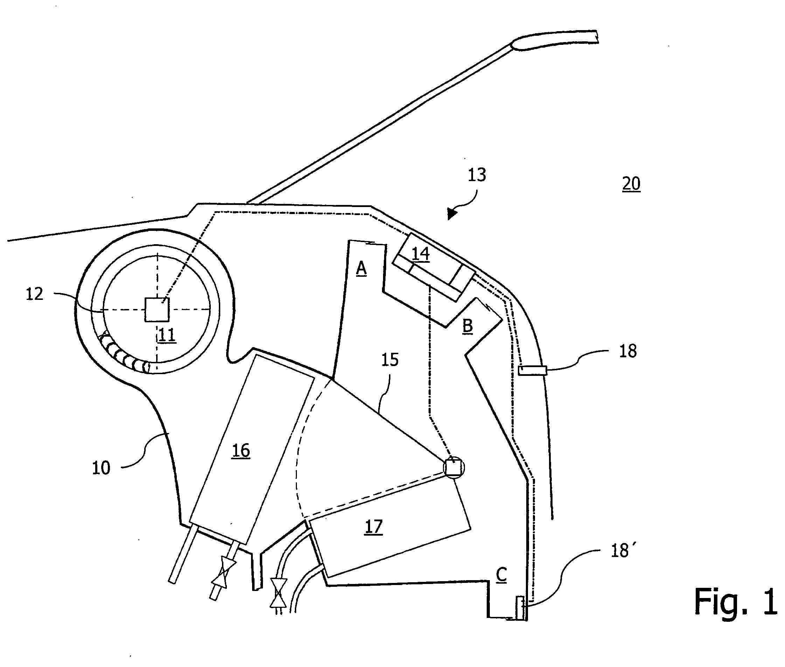

Die in Fig. 1 dargestellte Filtervorrichtung ist als Bestandteil einer Klimaanlage verwirklicht. Die Klimaanlage weist eine Luftführung 10 auf, die über einen Luftfilter 11 von einem Gebläse 12 mit angesaugter Außenluft versorgt wird. Mit dem Gebläse 12 ist eine Messeinheit 13 elektrisch verbunden, deren Funktionalität in einem Steuergerät der Klimaanlage softwaretechnisch realisiert ist. Eine Anzeige 14 an dem Steuergerät dient zur Visualisierung von Verschmutzungsgraden des Luftfilters 11. In der Luftführung 10 ist eine Luftleitklappe 15 angeordnet, welche die Einstellung unterschiedlicher Stromwege A, B, C erlaubt, und die ebenfalls mit dem Steuergerät elektrisch verbunden ist. Die Klimatisierung (Kühlung, Heizung) des Fahrzeuginnenraums 20 wird über eine in der Luftführung 10 angeordnete Kühlung 16 bzw. Heizung 17 vorgenommen, deren Leistung in Rückkopplung auf ebenfalls mit dem Steuergerät gekoppelte Temperatursensoren 18, 18' eingestellt wird.

An dem Steuergerät mit der darin verwirklichten Funktionalität der Messeinheit 13 wird die Gebläsespannung unter Berücksichtigung der jeweiligen Stellung der Luftleitklappe 15 integriert, über die Auswahl einer entsprechenden Kennlinie 30, 30', 30' ein Verschmutzungsgrad des Luftfilters 11 ermittelt und in der Anzeige 14 visualisiert.

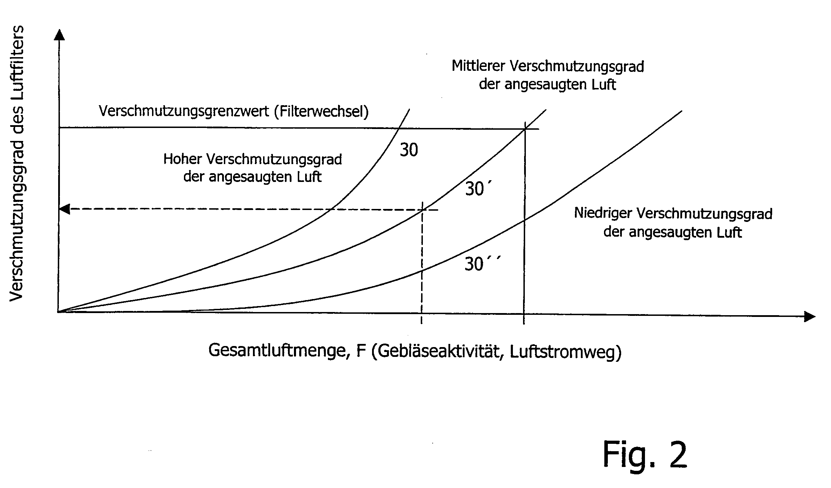

Die Fig. 2 zeigt ein Diagramm, welches die Abhängigkeit des Verschmutzungsgrads des Luftfilters 11 von der durch ihn geströmten Gesamtluftmenge für verschiedene Verschmutzungsgrade der angesaugten Luft wiedergibt. Die unterschiedlichen Verschmutzungsgrade der angesaugten Luft sind in den Kennlinien 30, 30', 30" (hoch/mittel/niedrig) wiedergegeben. Die Gesamtluftmenge wird als Funktion der Aktivität des Gebläses 12 und des eingestellten Luftstromweges A, B oder C an der Luftführung 10 durch die im Steuergerät der Klimaanlage realisierte Messeinheit 13 ermittelt. Bei einem durch den Händler voreingestellten, durchschnittlich mittleren Verschmutzungsgrad der angesaugten Luft (Kennlinie 30') wird der Verschmutzungsgrad des Luftfilters über die gestrichelte Linie von der Abszisse an die Ordinate bestimmt. Dieser wird im vorliegenden Fall in der Anzeige 14 mit z.B. "Filter 55%" visualisiert. Erreicht der Summenwert der über Gebläseaktivität und geschaltetem Luftstromweg berechneten Gesamtluftmenge einen Verschmutzungsgrenzwert, erscheint in der Anzeige 14 der Hinweis "Filter wechseln". Verschmutzungsgrenzwert und zugehörige Gesamtluftmenge sind an Abszisse bzw. Ordinate als jeweils durchgezogene waagerechte bzw. senkrechte Linie verdeutlicht.

### Bezugszeichenliste

- A, B, C: Stromwege
- 10: Luftführung
- 11: Luftfilter
- 12: Gebläse
- 13: Messeinheit
- 14: Anzeige
- 15: Luftleitklappe
- 16: Kühlung
- 17: Heizung
- 18,18': Sensoren der Klimaanlage
- 20: Fahrzeuginnenraum
- 30,30',30 ": Kennlinien

## Patentansprüche

1. Filtervorrichtung für ein Kraftfahrzeug mit einer Luftführung (10), an der unterschiedliche Luftstromwege (A, B, C) zum Zuleiten einer Luftmenge in den Fahrzeuginnenraum (20) einstellbar und in der ein Luftfilter (11) zum Abscheiden von Schmutz sowie ein elektrisch angesteuertes Gebläse (12) zum Erzeugen eines geförderten Luftstroms angeordnet sind, **gekennzeichnet durch** eine mit dem Gebläse (12) und der Luftzuführung (10) elektrisch verbundene Messeinheit (13), die in Abhängigkeit von der Gebläsespannung und des eingestellten Luftstromwegs (A, B, C) eine zeitlich integrierte, insgesamt **durch** den Luftfilter (11) geströmte Luftmenge berechnet sowie speichert, den Verschmutzungsgrad des Luftfilters (11) in Abhängigkeit von dieser Gesamtluftmenge ermittelt und in einer Anzeige (14) visualisiert.

2. Filtervorrichtung nach Anspruch 1, **dadurch gekennzeichnet, dass** in der Messeinheit (13) wenigstens eine Kennlinie (30) gespeichert ist, die den Verschmutzungsgrad des Luftfilters (11) in Abhängigkeit von der Gesamtluftmenge angibt und die zum Ermitteln des Verschmutzungsgrads des Luftfilters (11) aus der festgestellten Gesamtluftmenge ausgewertet wird.

3. Filtervorrichtung nach Anspruch 1 oder 2, **dadurch gekennzeichnet, dass** in der Messeinheit (13) ein zu erwartender durchschnittlicher Verschmutzungsgrad angesaugter Luft und/oder ein Luftfiltertyp einstellbar ist, der in die Ermittlung des Verschmutzungsgrads des Luftfilters (11) eingeht.

4. Filtervorrichtung nach Anspruch 3, **dadurch gekennzeichnet, dass** in der Messeinheit (13) gespeicherte Kennlinien (30, 30', 30") den Einfluss verschiedener Verschmutzungsgrade angesaugter Luft und/oder Filtertypen wiedergeben und, abhängig von der Einstellung, wenigstens eine davon zum Ermitteln des Verschmutzungsgrads des Luftfilters (11) ausgewertet wird.

5. Filtervorrichtung nach einem der Ansprüche 1 bis 4, **dadurch gekennzeichnet, dass** an oder im Bereich der Luftführung (10) ein mit der Messeinheit (13) elektrisch verbundener Temperaturfühler vorgesehen ist, dessen jeweils erfasste Temperatur in die Berechnung der Gesamtluftmenge eingeht, die durch den Luftfilter (11) geströmt ist.

6. Filtervorrichtung nach einem der Ansprüche 1 bis 5, **dadurch gekennzeichnet, dass** die Messeinheit (13) mit einem Geschwindigkeitsmesser des Kraftfahrzeuges elektrisch verbunden ist, dessen jeweils erfasste Geschwindigkeit in die Berechnung der Gesamtluftmenge eingeht, die durch den Luftfilter (11) geströmt ist.

7. Filtervorrichtung nach einem der Ansprüche 1 bis 6, **dadurch gekennzeichnet, dass** die an der Luftführung (10) einstellbaren Luftstromwege (A, B, C) eine Umluft- und eine Frischluftzufuhr zum Fahrzeuginnenraum (20) umfassen.

8. Filtervorrichtung nach einem der Ansprüche 1 bis 7, **dadurch gekennzeichnet, dass** der aktuelle Verschmutzungsgrad fortlaufend oder in zeitlichen Abständen in der Anzeige (14) visualisiert wird.

9. Filtervorrichtung nach einem der Ansprüche 1 bis 8, **dadurch gekennzeichnet, dass** der aktuelle Verschmutzungsgrad bei Erreichen vorbestimmter Verschmutzungsstufen in der Anzeige (14) visualisiert wird.

10. Filtervorrichtung nach einem der Ansprüche 1 bis 9, **dadurch gekennzeichnet, dass** bei Erreichen eines vorbestimmten Verschmutzungsgrenzwertes eine Aufforderung zum Filterwechsel in der Anzeige (14) visualisiert wird.

11. Filtervorrichtung nach einem der Ansprüche 1 bis 10, **dadurch gekennzeichnet, dass** die Anzeige (14) als Diodenanzeige oder als ein Display ausgeführt ist.

12. Filtervorrichtung nach einem der Ansprüche 1 bis 11, **dadurch gekennzeichnet, dass** die Funktionen der Messeinheit (13) in dem Steuergerät einer Klimaanlage ausgebildet sind.

13. Filtervorrichtung nach einem der Ansprüche 1 bis 12, **dadurch gekennzeichnet, dass** als Anzeige (14) eine üblicherweise schon in dem Kraftfahrzeug vorhandene Anzeige verwendet wird.
